# EUROPEAN PATENT SPECIFICATION

(11) **EP 1 653 707 B1**
(45) Date of publication and mention of the grant of the patent: **03.03.2010**
(21) Application number: 06002236.5
(22) Date of filing: 29.01.2002
(51) Int. Cl.: H04L 29/06, H04L 12/18

(54) **Method and device for providing a communication session**
Verfahren und Vorrichtung zur Aufstellung einer Kommunikationssitzung
Procédé et dispositif pour réaliser une session de communication

(43) Date of publication of application: 03.05.2006
(62) Divisional of application: 02002167.1
(73) Proprietor: Agere Systems Guardian Corporation, Orlando, Florida 32819 (US)
(72) Inventor: Chambers, Michael, 91056 Erlangen (DE); Pugliese, Pierluigi, 80639 München (DE)
(74) Representative: Mergel, Volker

(56) References cited:
- EP-A- 0 744 858
- WO-A-00/69140
- SIP WG HANDLEY/SCHULZRINNE/SCHOOLER/ROSENBERG ACIRI/COLUMBIA U /CALTECH/DYNAMICSOFT: "SIP: Session Initiation Protocol; draft-ietf-sip-rfc2543bis-00.txt;" IETF STANDARD-WORKING-DRAFT, INTERNET ENGINEERING TASK FORCE, IETF, CH, vol. sip, 13 July 2000 (2000-07-13), XP015028042 ISSN: 0000-0004
- CAMPBELL DYNAMICSOFT B: "SIP Call Control - Framework; draft-ietf-sip-cc-framework-00.txt;" IETF STANDARD-WORKING-DRAFT, INTERNET ENGINEERING TASK FORCE, IETF, CH, vol. sip, 13 July 2001 (2001-07-13), XP015027713 ISSN: 0000-0004

## Description

### Field of the Invention

The invention relates to a method and device for providing a communication session in a communication system, in general, and for a communication session with a plurality of users, in particular.

### Background of the Invention

Telecommunication, in general, and digital mobile radio telecommunication, in particular, are of increasing interest for all types of text, speech or data transmission in today's information society.

Recently, exchanging of text messages has become very popular. User of global system for mobile communication (GSM) networks, in particular young people use the GSM short message service (SMS) very frequently to communicate with their peer group.

To send an SMS-message it is necessary to:
- select a respective menu item at a mobile phone,
- enter a text,
- enter a telephone number of a recipient and
- send the text with short message service.

On most mobile telephones, this procedure has to be repeated for each recipient, even though the same text is transmitted. Reading a received SMS-message requires a similarly long and complicated procedure.

Furthermore the user or subscriber can either read a received SMS-message or see his own text to be sent, but cannot see both or send and receive simultaneously. Therefore, a user who wants to send a response to a message received has to remember the received message's content.

In general, this type of text transmission functionality between mobile telephone users is relatively poor. Nevertheless, short message service is pretty expensive. Typical cost for transmitting an SMS-message is about 0.2 Euro.

Furthermore, an SMS-message is disadvantageously restricted to 160 characters.

Moreover, SMS-messages are routed via a server in the GSM-network or, more precisely, in the network backbone. The SMS-message is buffered or stored by the server before being transmitted to the recipient. This procedure considerably slows down the short message service.

Typically, the sender of the SMS-message does not receive a confirmation, whether his message was received or read by the recipient.

All this makes a correspondence via SMS disadvantageous for the users but also for the network operator, in particular when the correspondence includes several subsequent messages to be exchanged between the users. Those disadvantages are even more serious when more than two users try to communicate via SMS. A simultaneous exchange of text is not possible at all.

However, due to the exploding spreading of telecommunication users and hard competition between the network operators, particularly in the field of mobile communication there is an ever-increasing and nearly unappeasable demand for new and improved services.

From WO 00/69140 a system for establishing communication sessions utilizing the so called session initial protocol is described. However, this document merely relates to networks communicating via the Internet protocol. It is described to send invitations selected contacts from a list using the session initiation protocol. However, this system does not make use of the advantageous concept of the present invention.

In Miladinovic I, Stadler J., "SIP Extensions for Multiparty conferencing" a multi-party conferencing method utilising the session initiation protocol (SIP) is described, wherein a CONF request is transmitted. However, Miladinovic and Stadler describe a system wherein a conference server receives the CONF-request and handles the participant list. In Rosenberg J., Schulzrinne H. "Models for Multi Party Conferencing in SIP" also a system with a conference server is described. Consequently, both systems require adaptations in the network backbone for implementation.

Therefore, it is an object of the present invention to provide a method and device which can be implemented in already existing communication systems, e.g. in GSM or UMTS networks.

A further object of the invention is to provide a method and device which is suitable for a communication session with a plurality of users.

Still a further object of the invention is to provide a method and device which enables exchanging a large amount of data, e.g. text and/or images in a convenient, inexpensive and fast manner.

Still a further object of the invention is to provide a method and device for providing a communication session with improved capabilities and avoiding the aforementioned disadvantages.

A further object of the invention is to provide a method and device for providing a communication session wherein users with mobile and wirebound terminals can participate.

The object of the invention is achieved by subject matter of independent claims 1, 9 and 10 in a surprisingly simple manner.

The method according to a preferred embodiment of the invention for providing a communication session with at least a first, second and third user of a communication system comprises at least a first, a second and a third terminal assigned to the first, second and third user, respectively. The method comprises the following steps:

The first terminal transmits an initiation message to the second terminal, wherein the initiation message comprises a first address assigned to the first terminal.

The second terminal receives the initiation message.

The second terminal transmits a first reply to the initiation message.

The first terminal receives the first reply.

The first terminal acts as server for the session and the second terminal is marked as active by the first terminal when the first reply is received by the first terminal.

The first terminal transmits the initiation message to the third terminal.

The third terminal receives the initiation message.

The third terminal transmits a second reply to the initiation message.

The first terminal receives the second reply.

The first terminal automatically updates a list of all active members, when the first terminal receives said second reply from said third terminal and the updated list is then automatically transmitted by said first terminal to each active member.

The communication session initiated or provided with the method according to the invention allows the users to exchange data, e.g. text or images in a simple and inexpensive manner. In particular, the data can be received and transmitted simultaneously. Furthermore a chat session in real time is enabled.

Advantageously the first user or initiator can be identified by the first address, which is preferably world-wide unique.

When using a telephone having a 10-button keyboard with multiple character occupancy, user convenience is largely improved when a word recognition software or method adapted to such a 10-button keyboard is provided.

The method and device according to the invention can easily be implemented in an existing communication system, e.g. a network according to the Global System for Mobile Communication (GSM) or the Universal Mobile Telecommunication System (UMTS).

Preferably, the reply of the second user or second terminal comprises a second address with which also the second user can be identified by others. The second address is preferably also world-wide unique.

In a preferred embodiment of the invention the first and/or second address is a packet data protocol address, e.g. an internet protocol (IP) address. Preferably, the first and/or second address are requested at the communication system or network, more precisely at a stationary part, e.g. a server at the backbone of the network.

However, it is also possible that the first and/or second terminal already have an address, e.g. an IP-address. In this case that address can be used instead of requesting a new one. This can happen when a terminal is already online, e.g. using internet or wireless application protocol (WAP) services when the session should be started.

Preferably, the first address is requested by the first or initiator terminal before the initiation message is transmitted and the second address is requested by the second user before the first reply is transmitted or sent.

Preferably, the initiation message is transmitted with a circuit switched service, e.g. short message service (SMS).

Advantageously, the short message service is available at any time and can be used, even when the second user has switched off his terminal. In this case, the message will be stored by a server of the network back-bone and will be automatically transmitted to the second user, when the second terminal is switched on and logs on to the network.

In a preferred embodiment, the first reply is transmitted with a packet switched service, e.g. with general packet radio service (GPRS). Preferably, this transmission uses internet protocol or wireless application protocol, in particular, when the first address is an IP- or WAP-address.

Furthermore, the first terminal marks the second user or participant as being active, when the first reply is received and/or the session is activated at this time by the first terminal which acts as server for the session. Therefore, no server outside the user terminals (which would be e.g. a stationary server in the network backbone) is necessary to store messages or assign them to the active session participants once the session is active.

Furthermore, when the session is active the first, second, third and possibly further active terminals enable data input by the respective user. Data are preferably text or text messages, but can also be other data, in particular digital data, e.g. images and/or digitised sounds as well.

In a most preferred embodiment, more than the first, second and third user are participating the communication session. However, the first user is still the initiator of the session, such that the first terminal assigned to the first user is characterised as initiator terminal.

The second and third user are members of a group comprising a plurality of users. The group comprises 2, 3, 4, 5, 6 or more users, each with a respective terminal assigned to him.

The first, second, third and further terminals can be mobile terminals or mobile stations, e.g. mobile phones and/or wire-bound phones and/or computers. Advantageously, the plurality of user terminals can also comprise different terminals.

When the first user or initiator wants to start the communication session, he first selects one or more other users, together defining a selected group of users. Selection input in the first terminal comprises selecting one or more users from a phone book and/or manually typing one or more subscriber identifications or telephone numbers. When all chosen participants are selected, the initiation message, e.g. an SMS-message comprising at least the first address of the first user is sent to each member of the group. Each member receiving the initiation message is enabled to decide whether he wants to participate the offered communication session. If so, he requests an own address and sends a reply including his own address to the initiator. When receiving the reply the initiator terminal will automatically mark this replying user as active. With the first received reply also the session becomes automatically active.

Preferably, the communication system or at least a portion of it is a digital system comprising a global system for mobile communication (GSM) network or a universal mobile telecommunication system (UMTS) network, such that at least some of the participating mobile terminals are GSM- or UMTS-terminals or phones.

The invention is described in more detail and in view of preferred embodiments hereinafter. Reference is made to the attached drawings.

### Brief Description of the Figures

It is shown in
- Fig. 1: a portion of a system architecture of a communication system and

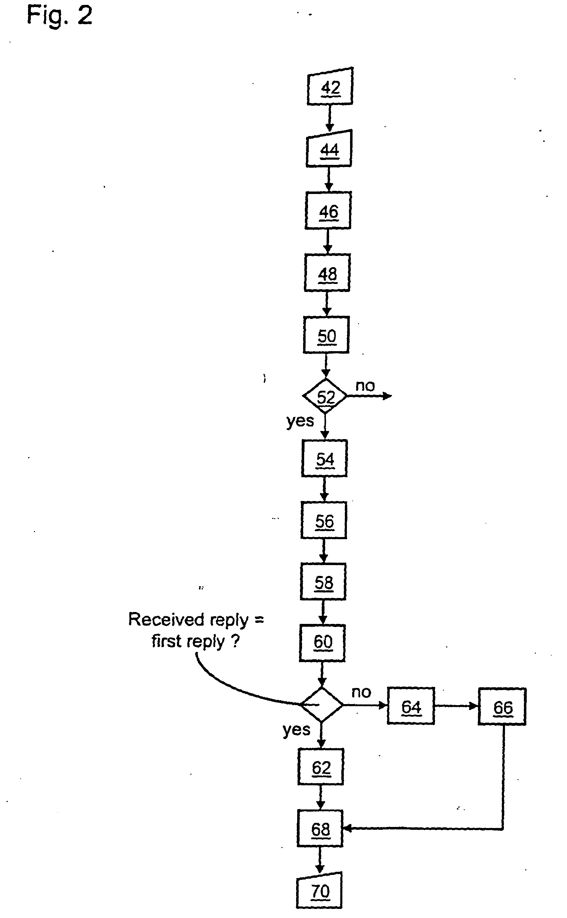

- Fig. 2: a flow chart of a course of actions from initiation to termination of a communication session according to a preferred embodiment of the invention.

### Detailed Description of the Invention

In the following various phases of a communication session according to the invention in form of a chat session is described. Preferably the methods steps take place in the order as described as follows.

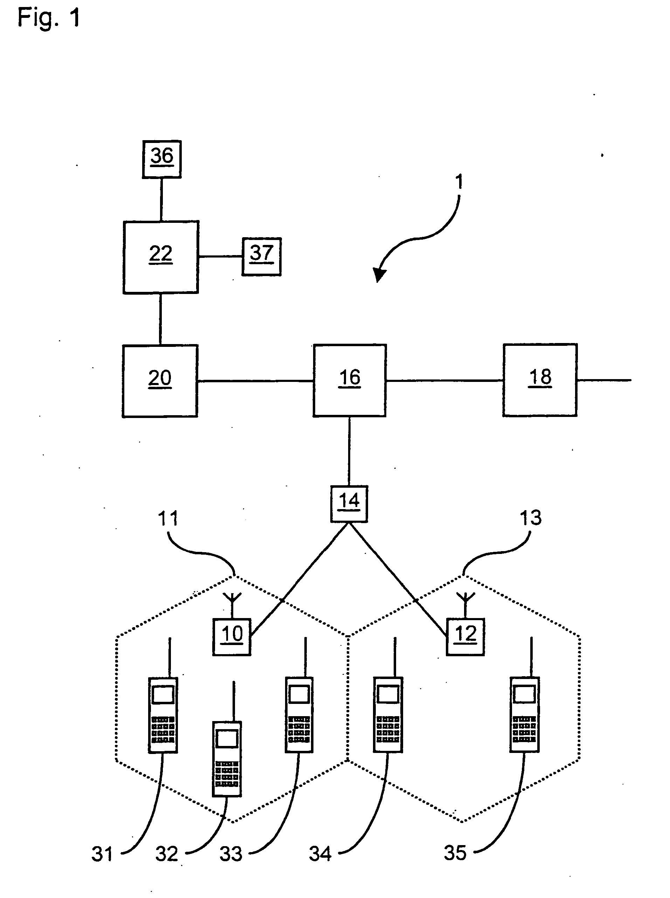

Fig. 1 shows a communication system or network 1 comprising two base transceiving stations 10, 12, a base station controller 14, a serving general packet radio service (GPRS) support node 16 two gateway GPRS support nodes 18, 20 and a gateway mobile switching centre '(GMSC) 22. GPRS support node 18 connects the communication network to other mobile communication networks. It is clear to those skilled in the art that the aforementioned components are merely an exemplary portion of a real telecommunication network. A real network typically comprises a large plurality of each of those components.

Furthermore an initiator terminal or GSM or UMTS mobile phone 31 four further GSM or UMTS mobiles phones 32, 33, 34 and 35 are shown. Mobile phones 31, 32 and 33 belong to cell 11 served by base transceiving station 10 and terminals 34 and 35 belong to cell 13 being served by base transceiving station 12.

Furthermore the communication network 1 comprises a stationary telephone 36 and a computer 37 both being wirebound connected to the network via a gateway mobile switching centre 22.

### 1. Session Initiation

When a user of a GPRS mobile phone wishes to start 42 a communication session or, more precisely, a chat session according to the invention he creates 44 an initial member list. This user is the initiator to which initiator terminal 31 is assigned to.

The initial member list is a list of subscriber identification or telephone numbers of other chat session enabled GPRS mobile and fixed-line telephone users who will be invited to join the chat session. Selection 44 can be simplified by selecting entries from the telephone book of mobile phone 31. Once the member list comprises all chosen users assigned to mobile phones 32, 33, 34 and 35, stationary phone 36 and stationary computer 37 in this example, a GPRS session is activated. This gives the mobile phone 31 an internet protocol (IP) address. The initiator's IP-address can either be requested 46 at the network and transmitted via radio channel from base transceiving station 10 to the initiator terminal 31 or terminal 31 already has an IP-address.

Now initiator terminal 31 automatically sends 48 an SMS-message to each member of the initial member list. The initiators IP-address, his telephone number, a name for the chat session, a greeting and a nickname of the initiator are comprised by this initiation message.

### 2. Replying to an Invitation

When the invited user terminals 32, 33, 34, 35, 36, 37 receive 50 the initiation or invitation SMS-message his terminal provides a choice 52 to accept or reject the invitation by a respective input. If a user accepts the invitation, his terminal activates a GPRS session. Thus the respective terminal requests 54 an IP-address from the network, but can also already have one. When this user or his respective terminal has got or has its own IP-address an automatic reply to the invitation is sent 56 to the initiator 31. This reply is not an SMS-message but an internet protocol message sent via GPRS.

### 3. Initiator Receives an Invitation Reply

When the initiator 31 receives 58 a reply to the invitation SMS-message of the first one of the invited users, e.g. from terminal 32 this member is marked as active 60 by initiator terminal 31. Now the chat session is active 62.

When the initiator 31 receives a second reply, e.g. from mobile phone 33 the initiator's terminal 31 automatically updates 64 a list of all active members. This updated list includes the IP-addresses, the nicknames and the telephone numbers of each active member and is then automatically transmitted 66 by the initiators terminal 31 to each active member, also to the one who lastly replied.

### 4. An Active Chat Session

Once the session is active, any of the active members can send 68 a chat text. The chat text is packed into a chat message and sent to all other active members using a packet switched service, e.g. with internet protocol.

When a text message is received by another member, the text is extracted, prefixed with the senders nickname which can be recognized e.g. by the source IP-address and displayed.

The display of each terminal is divided into two portions and text to be transmitted is entered using e.g. the top half of the display. E.g. the lower half is used to display incoming text. When no own text to be sent is being displayed, the whole screen is used to display incoming text.

### 5. Leaving a Chat Session

If an active member wants to leave the chat session, a "LEAVE"-message is sent to the initiator. The initiators terminal 31 automatically removes this member from the active list and sends each remaining active member an updated list. This leaving member is now set to be inactive and is not sent any more chat messages for this session.

Preferably, the GPRS session of this member that left is now deactivated.

### 6. Re-entering a Chat Session

Should an inactive member wish to join or rejoin a still active chat session, he first activates a GPRS session if one is not still or already active. He then sends a "JOIN"-message comprising his IP-address to the initiator. The initiator can either accept or reject the join request. When the join request is rejected, the initiator sends a "JOIN REJECT"-message to the join requester which optionally comprises a text.

If the initiator accepts to join request, the joining member is set to the active state and an updated active member list is sent to all active members, also to the user who sent the join request. When the joining member receives the list, he knows that his request was accepted.

### 7. Joining an Active Chat Session

At any time during an active chat session the initiator can invite other users to join the session. For this purpose the initiator transmits a new invitation SMS-message. The joining process is then equivalent to the reply process as described in section 2.

### 8. The Initiator Leaves the Chat Session

Should the initiator wish to leave the chat session, he can chose between terminating the session or passing the initiator status to another active member.

If the chat session should be terminated 70 by the initiator 31 he sends a "TERMINATE"-message to all active members.

If the initiator wants to pass on the initiator status a message is sent to the chosen active member. If that chosen member accepts the initiator status the session remains active with the latter user's terminal acting as server.

It will be appreciated that the above-described embodiment of the method and device according to the present invention has been set forth solely by way of example and illustration of the principals thereof and that further modifications and alterations may be made therein without thereby departing from the scope of the invention.

## Claims

1. Method for providing a communication session with at least a first, second and third user of a communication system (1) comprising at least a first, second and third terminal (31, 32, 33) assigned to the first, second and third user, respectively, wherein the second and third terminal (32, 33) are members of a group of terminals, the method comprising:
the first terminal (31) transmitting (48) an initiation message to the second terminal (32), the initiation message comprising a first address assigned to the first terminal (31),
the second terminal (32) receiving (50) the initiation message,
the second terminal (32) transmitting (56) a first reply to the initiation message and
the first terminal (31) receiving (58) the first reply,
the first terminal (31) transmitting (48) the initiation message to the third terminal,
the third terminal (33) receiving (50) the initiation message,
the third terminal (33) transmitting (56) a second reply to the initiation message and
the first terminal (31) receiving (58) the second reply,
**characterized in that**
the first terminal acts as server for the communication session, wherein
the second terminal (32) is marked as active (60) by the first terminal (31) when the first reply is received (58) by the first terminal (31) and
the first terminal (31) automatically updates (64) a list of all active members, when the first terminal (31) receives said second reply from said third terminal (33) and the updated list is then automatically transmitted (66) by said first terminal (31) to each active member (32, 33).

2. Method according to claim 1, wherein
the first reply comprises a second address assigned to the second terminal (32).

3. Method according to one of the preceding claims, wherein the first terminal (31) requests the first address at the communication system (1) before the initiation message is transmitted (48).

4. Method according to one of the preceding claims, wherein the second terminal (32) requests (54) a second address at the communication system (1) before transmitting (56) the first reply.

5. Method according to one of the preceding claims, wherein the session is activated (62) and the second terminal (32) is marked as active (60) by the first terminal (31) when the first reply is received (58) by the first terminal (31).

6. Method according to one of the preceding claims for providing a communication session with at least the first terminal (31) and the group of terminals (32, 33, 34, 35, 36, 37), the method comprising:
the first terminal (31) transmitting (48) the initiation message to each member of the group.

7. Method according to claim 6 for providing a communication session with a plurality of users, wherein
the group of terminals comprises a plurality of member terminals (32, 33, 34, 35, 36, 37) each assigned to a respective user,
each member terminal (32, 33, 34, 35, 36, 37) receiving (50) the initiation message,
at least some of the member terminals are transmitting (56) a reply to the first terminal,
the first terminal (31) receiving (58) the replies and
the first terminal (31) marking (60) each terminal from which a reply is received (58) as being active.

8. Method according to one of the preceding claims, wherein a circuit switched message is transmitted with the first terminal (31) assigned to the first user of the communication system (1) to a plurality of users comprising at least the second and the third user, the method further comprising:
the first terminal (31) providing an input by the first user for the circuit switched message,
the first terminal (31) providing an input by the first user to define a group of users,
selecting (44) a subscriber number for each user of said plurality of users,
transmitting said message to each user of said plurality of users.

9. Telecommunication terminal (31) for using with a communication system (1), the terminal (31) comprising
means for transmitting an initiation message comprising an initiator address to other terminals (32, 33, 34, 35, 36, 37),
means for receiving an initiation message from other terminals,
means for storing an initiator address,
means for transmitting a reply message to another terminal and
means for receiving a reply message from other terminals,
means for acting as a server for a communication session with a plurality of users,
means for handling a list of active terminals,
means for assigning each terminal from which a reply is received to the list of active terminals and
means for transmitting the list of active terminals to each active terminal.

10. Telecommunication network (1) providing packet data protocol addressed service, the network comprising
a plurality of telecommunication terminals (31) according to claim 9,
a plurality of base transceiving stations (10, 12),
a plurality of base station controllers (14),
at least a serving packet radio service support node (16).

## Patentansprüche

1. Verfahren zum Bereitstellen einer Kommunikationssitzung mit zumindest einem ersten, einem zweiten und einem dritten Nutzer eines Kommunikationssystems (1), das zumindest ein erstes, ein zweites und ein drittes Endgerät (31, 32, 33) umfasst, die dem ersten, dem zweiten bzw. dem dritten Nutzer zugeordnet sind, wobei das zweite und das dritte Endgerät (32, 33) Teil einer Gruppe von Endgeräten sind, wobei das Verfahren umfasst:
das erste Endgerät (31) sendet (48) eine Initiierungsnachricht an das zweite Endgerät (32), wobei die Initiierungsnachricht eine erste Adresse umfasst, die dem ersten Endgerät (31) zugeordnet ist;
das zweite Endgerät (32) empfängt (50) die Initiierungsnachricht,
das zweite Endgerät (32) sendet (56) eine erste Antwort auf die Initiierungsnachricht und
das erste Endgerät (31) empfängt (58) die erste Antwort,
das erste Endgerät (31) sendet (48) die Initiierungsnachricht an das dritte Endgerät,
das dritte Endgerät (33) empfängt (50) die Initiierungsnachricht,
das dritte Endgerät (33) sendet (56) eine zweite Antwort auf die Initiierungsnachricht und
das erste Endgerät (31) empfängt (58) die zweite Antwort
**dadurch gekennzeichnet, dass**
das erste Endgerät als Server für die Kommunikationssitzung agiert, wobei
das zweite Endgerät (32) durch das erste Endgerät (31) als aktiv markiert wird (60), wenn das erste Endgerät (31) die erste Antwort empfängt (58) und
das erste Endgerät (31) automatisch eine Liste mit sämtlichen aktiven Mitgliedern aktualisiert (64), wenn das erste Endgerät (31) die zweite Antwort von dem dritten Endgerät (33) empfängt, und wobei die aktualisierte Liste dann automatisch von dem ersten Endgerät (31) an jedes aktive Mitglied (32, 33) gesendet wird (66).

2. Verfahren nach Anspruch 1, wobei die erste Antwort eine zweite Adresse umfasst, die dem zweiten Endgerät (32) zugeordnet ist.

3. Verfahren nach einem der vorhergehenden Ansprüche, wobei das erste Endgerät (31) die erste Adresse bei dem Kommunikationssystem (1) anfordert, bevor die Initiierungsnachricht gesendet wird (48).

4. Verfahren nach einem der vorhergehenden Ansprüche, wobei das zweite Endgerät (32) eine zweite Adresse bei dem Kommunikationssystem (1) anfordert (54), bevor die erste Antwort gesendet wird (56).

5. Verfahren nach einem der vorhergehenden Ansprüche, wobei die Sitzung aktiviert wird (62) und das zweite Endgerät (32) durch das erste Endgerät (31) als aktiv markiert wird (60), wenn das erste Endgerät (31) die erste Antwort empfängt (58).

6. Verfahren nach einem der vorhergehenden Ansprüche zum Bereitstellen einer Kommunikationssitzung mit zumindest dem ersten Endgerät (31) und der Gruppe von Endgeräten (32, 33, 34, 35, 36, 37), wobei das Verfahren umfasst:
das erste Endgerät (31) sendet (48) die Initiierungsnachricht an jedes Mitglied der Gruppe.

7. Verfahren nach Anspruch 6 zum Bereitstellen einer Kommunikationssitzung mit einer Mehrzahl von Nutzern, wobei
die Gruppe von Endgeräten eine Mehrzahl von Mitgliedsendgeräten (32, 33, 34, 35, 36, 37) umfasst, die jeweils einem entsprechenden Nutzer zugeordnet sind,
jedes Mitgliedsendgerät (32, 33, 34, 35, 36, 37) die Initiierungsnachricht empfängt (50),
zumindest einige der Mitgliedsendgeräte eine Antwort an das erste Endgerät senden (56),
das erste Endgerät (31) die Antworten empfängt (58) und
das erste Endgerät (31) jedes Endgerät, von dem eine Antwort empfangen wird (58), als aktiv markiert (60).

8. Verfahren nach einem der vorhergehenden Ansprüche, wobei eine leitungsvermittelte Nachricht mit dem ersten Endgerät (31), das dem ersten Nutzer des Kommunikationssystems (1) zugeordnet ist, an eine Mehrzahl von Nutzern gesendet wird, die zumindest den zweiten und den dritten Nutzer umfasst, wobei das Verfahren ferner umfasst:
das erste Endgerät (31) ermöglicht eine Eingabe durch den ersten Nutzer für die leitungsvermittelte Nachricht,
das erste Endgerät (31) ermöglicht eine Eingabe durch den ersten Nutzer, um eine Gruppe von Nutzern zu definieren,
für jeden Nutzer der Mehrzahl von Nutzern wird eine Teilnehmernummer ausgewählt (44),
die Nachricht wird an jeden Nutzer der Mehrzahl von Nutzern gesendet.

9. Telekommunikationsendgerät (31) zur Nutzung mit einem Kommunikationssystem (1), wobei das Endgerät (31) umfasst:
Mittel zum Senden einer Initiierungsnachricht, die eine Initiatoradresse umfasst, an andere Endgeräte (32, 33, 34, 35, 36, 37),
Mittel zum Empfangen einer Initiierungsnachricht von anderen Endgeräten,
Mittel zum Speichern einer Initiatoradresse,
Mittel zum Senden einer Antwortnachricht an ein anderes Endgerät und
Mittel zum Empfangen einer Antwortnachricht von anderen Endgeräten,
Mittel zum Agieren als ein Server für eine Kommunikationssitzung mit einer Mehrzahl von Nutzern,
Mittel zum Unterhalten einer Liste aktiver Endgeräte,
Mittel zum Zuweisen jedes Endgeräts, von dem eine Antwort empfangen wird, zu der Liste aktiver Endgeräte und
Mittel zum Senden der Liste aktiver Endgeräte an jedes aktive Endgerät.

10. Telekommunikationsnetz (1), das einen Paketdatenprotokoll-adressierten Dienst bereitstellt, wobei das Netz umfasst:
eine Mehrzahl von Telekommunikationsendgeräten (31) gemäß Anspruch 9,
eine Mehrzahl von Basis-Transceiverstationen (10, 12),
eine Mehrzahl von Basisstation-Controllern (14) und
zumindest einen im Dienst befindlichen, Paketfunkdienst unterstützenden Knoten (16).

## Revendications

1. Procédé pour réaliser une session de communication avec au moins un premier, un second et un troisième utilisateurs d'un système de communication (1) comprenant au moins un premier, un second et un troisième terminaux (31, 32, 33) assignés aux premier, au second et au troisième utilisateur, respectivement, dans lequel les second et le troisième terminaux (32, 33) sont des éléments d'un groupe de terminaux, le procédé comprenant :
le premier terminal (31) transmettant (48) un message d'initiation au second terminal (32), le message d'initiation comprenant une première adresse assignée au premier terminal (31),
le second terminal (32) recevant (50) le message d'initiation,
le second terminal (32) transmettant (56) une première réponse au message d'initiation et
le premier terminal (31) recevant (58) la première réponse,
le premier terminal (31) transmettant (48) le message d'initiation au troisième terminal,
le troisième terminal (33) recevant (50) le message d'initiation,
le troisième terminal (33) transmettant (56) une seconde réponse au message d'initiation et
le premier terminal (31) recevant (58) la seconde réponse,
**caractérisé en ce que**
le premier terminal agit comme un serveur pour la session de communication, dans lequel
le second terminal (32) est marqué comme actif (60) par le premier terminal (31) quand la première réponse est reçue (58) par le premier terminal (31) et
le premier terminal (31) remet à jour (64) automatiquement une liste de tous les éléments actifs, quand le premier terminal (31) reçoit ladite seconde réponse dudit troisième terminal (33) et la liste remise à jour est ensuite transmise (66) automatiquement par ledit premier terminal (31) à chaque élément actif (32, 33).

2. Procédé selon la revendication 1, dans lequel
la première réponse comprend une seconde adresse assignée au second terminal (32).

3. Procédé selon l'une quelconque des revendications précédentes, dans lequel le premier terminal (31) demande la première adresse au système de communication (1) avant que le message d'initiation soit transmis (48).

4. Procédé selon l'une quelconque des revendications précédentes, dans lequel le second terminal (32) demande (54) une seconde adresse au système de communication (1) avant de transmettre (56) la première réponse.

5. Procédé selon l'une quelconque des revendications précédentes, dans lequel la section est activée (62) et le second terminal (32) est marqué comme actif (60) par le premier terminal (31) quand la première réponse est reçue (58) par le premier terminal (31).

6. Procédé selon l'une quelconque des revendications précédentes pour réaliser une session de communication avec au moins le premier terminal (31) et le groupe de terminaux (32, 33, 34, 35, 36, 37), le procédé comprenant :
le premier terminal (31) transmettant (48) le message d'initiation à chaque membre du groupe.

7. Procédé selon la revendication 6 pour réaliser une session de communication avec une pluralité d'utilisateurs, dans lequel
le groupe de terminaux comprend une pluralité de terminaux élémentaires (32, 33, 34, 35, 36, 37) chacun assigné à un utilisateur respectif,
chaque terminal élémentaire (32, 33, 34, 35, 36, 37) recevant (50) le message d'initiation,
au moins quelques-uns des terminaux élémentaires transmettent (56) une réponse au premier terminal,
le premier terminal (31) recevant (58) les réponses et
le premier terminal (31) marquant (60) chaque terminal depuis lequel une réponse est reçue (58) comme étant actif.

8. Procédé selon l'une quelconque des revendications précédentes, dans lequel un message de circuit commuté est transmis avec le premier terminal (31) assigné au premier utilisateur du système de communication (1) à une pluralité d'utilisateurs comprenant au moins le second et le troisième utilisateur, le procédé comprenant en outre :
le premier terminal (31) fournissant une entrée par le premier utilisateur pour le message de circuit commuté,
le premier terminal (31) fournissant une entrée par le premier utilisateur pour définir un groupe d'utilisateurs,
sélectionner (44) un numéro d'abonné pour chaque utilisateur de ladite pluralité d'utilisateurs,
transmettre ledit message à chaque utilisateur de ladite pluralité d'utilisateurs.

9. Terminal de télécommunication (31) pour utiliser avec un système de communication (1), le terminal (31) comprenant
des moyens pour transmettre un message d'initiation comprenant une adresse d'initiateur aux autres terminaux (32, 33, 34, 35, 36, 37),
des moyens pour recevoir un message d'initiation des autres terminaux,
des moyens pour stocker une adresse d'initiateur,
des moyens pour transmettre un message de réponse à un autre terminal et
des moyens pour recevoir un message de réponse des autres terminaux,
des moyens pour agir comme un serveur pour une session de communication avec une pluralité d'utilisateurs,
des moyens pour manipuler une liste de terminaux actifs,
des moyens pour assigner chaque terminal depuis lequel une réponse est reçue à la liste des terminaux actifs et
des moyens pour transmettre la liste des terminaux actifs à chaque terminal actif.

10. Réseau de télécommunication (1) fournissant un service adressé PDP, le réseau comprenant
une pluralité de terminaux de télécommunication (31) selon la revendication 9,
une pluralité de BTS (10, 12),
une pluralité de BSC (14),
au moins une SGSN (16).
